# EUROPEAN PATENT SPECIFICATION

(11) **EP 3 688 705 B1**
(45) Date of publication and mention of the grant of the patent: **02.08.2023**
(21) Application number: 18862535.4
(22) Date of filing: 27.09.2018
(51) Int. Cl.: H04L 9/00, H04L 9/40, H04L 9/32, G06Q 20/06, G06Q 20/36, G06Q 20/38

(54) **TRANSACTION PRIVACY IN PUBLIC DISTRIBUTED LEDGER SYSTEMS**
TRANSAKTIONSPRIVATSPHÄRE IN ÖFFENTLICHEN DISTRIBUTED-LEDGER-SYSTEMEN
CONFIDENTIALITÉ DE TRANSACTIONS DANS DES SYSTÈMES À REGISTRE DISTRIBUÉ PUBLIC

(30) Priority: 29.09.2017 US 201762565099 P; 12.10.2017 US 201762571556 P; 14.11.2017 US 201762585943 P; 19.03.2018 US 201862644841 P
(43) Date of publication of application: 05.08.2020
(73) Proprietor: Leverage Rock LLC, Albuquerque, NM 87114 (US)
(72) Inventor: ANDERSON, Thomas G., Albuquerque NM 87114 (US)
(74) Representative: Smith, Jeremy Robert
(86) International application number: PCT/US2018/053242
(87) International publication number: WO 2019/067800

(56) References cited:
- WO-A1-2017/066715
- US-A1- 2016 350 749
- US-A1- 2017 109 744
- US-A1- 2017 177 855
- US-A1- 2017 237 554
- US-A1- 2017 279 774

## Description

### Technical Field

This application relates to the field of distributed ledger systems, and more specifically to protecting the privacy of transactions in distributed ledgers that are publicly accessible.

### Background

There are various trustless blockchains in existence that can be used to implement cryptocurrencies and other such concepts. The assumptions behind such blockchains, specifically the assumption that there is no trusted entity, limit such blockchains from providing immediate transactions, privacy protections, a stable cryptocurrency, and the prevention of fraud, theft, and loss. The present invention provides mechanisms that can be used with existing blockchains to facilitate such desirable features.

WO2017/066715A1 in an abstract states that "Systems and methods for managing digital identities. In some embodiments, a method is provided, comprising acts of: using a plurality of measurements taken from a user to generate an identifier for the user, the identifier comprising a cryptographic proof of the plurality of measurements; instantiating a digital identity representation associated with the identifier for the user, the digital identity representation comprising program code that implements rules for attestation; generating an electronic signature over the digital identity representation; and publishing the digital identity representation and the electronic signature to a distributed ledger system."

### Summary of Invention

The present invention is set out in the independent claims, with some optional features set out in the claims dependent thereto.

Some embodiments of the present invention provide a method of implementing a private but traceable primary transaction implementing a transfer of an asset from an originator to a recipient using a third party, using a distributed network of computers implementing a distributed ledger (where a "distributed ledger" includes hashgraphs, blockchains, and the like), comprising: (a) recording at the third party information relative to the originator that allows determination of the identity of the originator (where "identity" can be direct identifying information such as name, address, government identification number; or identification of a wallet that can be connected to a particular user, or a mechanism such as a zero knowledge proof that allows identity to be established later) (where "recording at the third party" means storing on persistent memory such that can be recalled later if needed, e.g., ROM, Flash memory, optical disks, magnetic disks, or others); (b) recording on the distributed ledger a transfer of the asset from the originator to the third party and verifying that said transfer has been recorded on the distributed ledger (where "recording on the distributed ledger" can comprise various mechanisms, depending on the specific implementation used, and in general involves submitting the transaction to the network of computers implementing the distributed ledger, with cryptographical authentication of the transaction, and observing the distributed ledger until the transaction is on a block known to be immutable, and where "transfer of the asset" can be just the asset needed for the primary transaction or can include that asset and other assets e.g. large sum of money of which a subset is used for the primary transaction and rest remains with third party for satisfying other transaction requests); (c) communicating from the originator to the third party an identifier of the recipient, where said communication is not recorded on the distributed ledger (if the third party holds only a single, indivisible asset of the originator, then the request from the originator only needs to specify the recipient; but if the recipient holds more than one asset, or a divisible asset such as currency, then the request from the originator can also specify the particular asset of subset of asset to be transferred); (d) defining a plurality of secondary transactions, each comprising the recipient and a secondary originating party and an asset portion, wherein the combination of asset portions corresponds to the asset (where "corresponds to the asset" means that the combination of asset portions satisfies the requirements for the transfer of the asset; with a simple currency transfer the correspondence can simply be that the sum of the portions equals the requested amounts; in some situations the correspondence can be other than a simple sum, e.g., to cover transaction fees, recording fees, conversion fees, discounts, holdbacks, etc.) and at least some of which secondary originating parties indicate a party other than the originator; (e) recording on the distributed ledger the plurality of secondary transactions.

In some embodiments, the number of the plurality of secondary transactions is determined by a predetermined method (where a "predetermined method" can include selecting a random number, or selecting a number by an algorithmic method, e.g., responsive to factors such as the size of value of the asset, the identity or location of the originator, the identity or location of the recipient, the identity of the third party, the time of the transfer, a history of transactions of the recipient, a history of transactions of the originator) at least equal to a predetermined lower bound. In general, more secondary transactions can make it harder to reconstruct the primary transaction, e.g., splitting a primary transaction into 2 secondary transactions somewhat obscures the primary transaction; splitting into 5 obscures it more, into 10 or 100 even more. More secondary transactions means more overhead in submitting and recording the transactions, however.

In some embodiments, the number of the plurality of secondary transactions is a random number no more than a predetermined upper bound. An upper bound on the number of secondary transactions can reduce overhead, e.g., if there is a recording fee for each secondary transaction then the recording fees can become prohibitive if the number of secondary transactions is too high relative to the size of the primary transaction.

In some embodiments, the third party controls a plurality of wallets on the distributed ledger, and where at least one of the plurality of secondary originating parties is associated with a different wallet than at least one other of the plurality of secondary originating parties.

In some embodiments, recording the plurality of secondary transactions comprises recording the plurality of secondary transactions at a plurality of times. The secondary transaction recording can be spread over a few minutes, a few days, or even longer depending on the nature and size of the primary transaction, and the desire for urgency balanced against the desire to keep the transaction private.

In some embodiments, at least two of the plurality of times are separated by a time interval determined by a predetermined method and no less than a predetermined lower bound. More separation can make it harder to reconstruct the primary transaction, so separations of at least one minute, 30 minutes, one day, or longer can be useful in some situations.

In some embodiments, at least two of the plurality of times are separated by a time interval determined by a predetermined method and no more than a predetermined upper bound. An upper bound can help the parties know when the primary transaction will be complete by recording of all the secondary transactions, and can be selected to ensure that the need for urgency is satisfied while allowing enough time for other transactions to obscure the relationship of the secondary transactions to each other.

In some embodiments, the third party receives communications specifying a plurality of primary transactions, at least one of which is from the originator and at least one of which is from a party other than the originator, and all of which are to the recipient, and wherein the third party combines the plurality of primary transactions to the recipient and the combined transaction is treated as the primary transaction for the remainder of the method.

In some embodiments, the number of the plurality of secondary transactions is determined by a predetermined method and at least equal to a predetermined lower bound.

In some embodiments, the number of the plurality of secondary transactions is determined by a predetermined method and no more than a predetermined upper bound.

In some embodiments, the third party controls a plurality of wallets on the distributed ledger, and where at least one of the plurality of secondary originating parties is associated with a different wallet than at least one other of the plurality of secondary originating parties.

In some embodiments, recording the plurality of secondary transactions comprises recording the plurality of secondary transactions at a plurality of times.

In some embodiments, at least two of the plurality of times are separated by a time interval determined by a predetermined method and no less than a predetermined lower bound.

In some embodiments, at least two of the plurality of times are separated by a time interval determined by a predetermined method and no more than a predetermined upper bound.

In some embodiments, the originator and the recipient are the same entity. This can be useful, as an example, to obscure ownership of assets after the owner of a wallet has been identified (e.g., by mining transactions for patterns that allow identification of an owner of a wallet). The owner can initiate a primary transaction that transfers assets out of the compromised wallet to another wallet owned by the same person, and the claimed method can make it difficult for other parties to determine the new wallet owned that now has the assets.

Some embodiments of the present invention provide a method of implementing a private but traceable transaction, from an originator to a recipient using a third party, using a distributed network of computers implementing a distributed ledger, comprising: (b) recording on the distributed ledger a transfer of an asset that requires authentication by the originator and authentication by a third party (e.g., cosigner or guarantor, adult approving child transactions, government or regulatory approval, etc.); (c) communicating from the originator to the third party verification information that verifies the originator's control of the asset; (d) verifying at the third party said verification information; (e) recording on the distributed ledger an approval of the transfer.

In some embodiments, the transfer recorded on the distributed ledger is voided if the approval is not recorded within a predetermined time.

In some embodiments, the originator can void the transfer recorded on the distributed ledger before the approval is recorded on the distributed ledger

### Brief Description of the Drawings

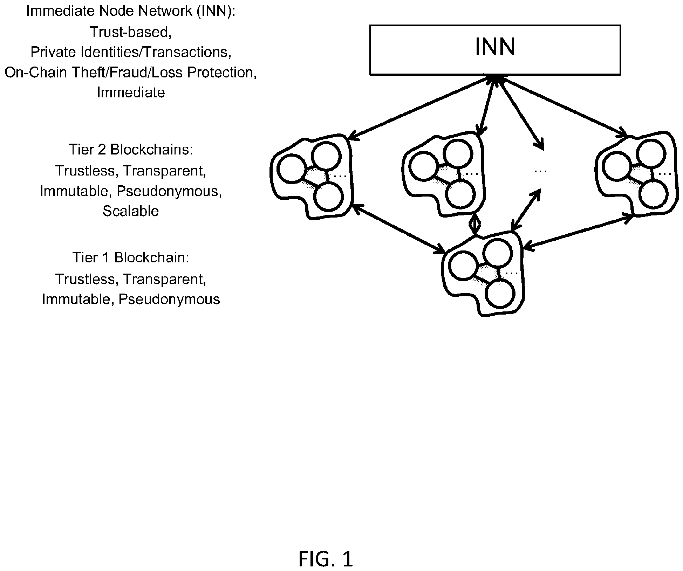

FIG. 1 is an illustration of an example immediate note network according to the present invention.

### Industrial Applicability and Modes of Carrying Out the Invention

The description at times refers to aspects as "essential" or "most important" or "must include" or similar; those references are intended to highlight aspects for the reader's attention, and do not mean that the invention is limited to embodiments that include those aspects. The description also describes one or more example embodiments. Various alternative embodiments are contemplated, including example embodiments in which parameters described as varying can be set, or varied upon different events or timing; and in which parameters described as fixed in some example embodiments can be varied. Embodiments of the invention are described in connection with an example blockchain system; the invention can be used with other distributed ledgers including other blockchain systems. Some embodiments contemplate a trusted third party, or T3P. Depending on the specific embodiment and the nature of the underlying distributed ledger, the T3P might require special permissions or relationships with the governing entity or organization of the distributed ledger, or special rights relative to the protocol implemented by the distributed ledger. Those skilled in the art will appreciate the special rights, permissions, or relationships required to implement the embodiments on a specific distributed ledger under consideration.

Some trademarks are used in the description to refer to products and services provided by others, such as ERC20, Ethereum, and Ripple. The owners of such marks reserve all rights in such marks.

The present invention is useful with various blockchain systems. For simplicity, the description herein will assume the blockchain system described in US provisional applications 62/565,099 filed 9/29/2017, 62/571,556 filed 10/12/2017, 62/585,943 filed 11/14/2017, and 62/644,841 filed 3/19/2017, each of which is incorporated herein by reference. Those skilled in the art will appreciate variations in the implementation and examples presented here to accommodate other blockchain systems.

The present invention provides various capabilities through the integration of a trusted entity with a trustless blockchain. Note that the trustless blockchain does not itself have to trust the trusted entity, and the trusted entity need not be trusted by all users of the trustless blockchain. Rather, those users who are comfortable with, or required to, trust the trusted entity can use it to realize certain benefits that are not possible with purely trustless blockchains.

Certain embodiments of the present invention make use of a trust-based network operated by a trusted entity. This network is referred to herein as the Immediate Node Network, or INN, and is illustrated in FIG. 1. It is built on top of the underlying distributed ledger. It allows immediate transactions that can be verified in under one second. It also enables a number of additional features such as fraud and theft protection, loss prevention, a stable version of the cryptocurrency, and private transactions. Details on the utilization of the INN, and features innately tied into embodiments of the present invention, are provided in various sections below. The INN utilizes a secondary form of the blockchain's cryptocurrency called Protected-currency, described below. Protected-currency Wallets and Protected-currency transactions have a known identity associated with them, privately held by T3P, which in turn enables the INN's optional features.

### Wallets

Wallets include private and public keypairs, and indicate ownership of Primary-currency. Wallets can be automatically added for accounts on systems that use Primary-currency. Code will be available for individuals to create their own wallets as well.

There are two types of wallets, standard Primary-currency wallets and Protected-currency wallets, which have added protections and which are described below. The system API will include wrappers for other cryptocurrencies, as well. These wrappers will create an interface for interoperability between the system and other blockchains.

### Validator Incentives

Validators are rewarded for maintaining consensus. The rewards for Validators are commensurate with the task of running a server, however, and therefore the vast majority, if not all, of new Primary-currency issuances will serve as incentives to the community surrounding the system. It is expected that Validators will be paid out of Primary-currency reserves or in fiat currencies.

The rewards for Validators are based solely off of maintaining consensus and are awarded per block-pair in the case that Primary-currency is part of the incentive. Block rewards are not affected by which Validators are actually proposing and creating blocks. The reward calculation amount can be continually adjusted by a governing entity or organization, referred to herein as GOV. Validators who are active will share in the block rewards irrespective of who proposed the blocks.

### Smart Contracts and Smart Coins

Smart contracts can be implemented either as part of the core protocol itself, or in the form of Smart Coins which provide added functionality. Core functionalities that create value for the entire blockchain are implemented in the protocol itself. For example, the definitions of what types of Smart Coins are available and how they are processed is part of the protocol. Capabilities associated with Protected-currency (such as chargebacks and recoveries from theft or loss), lending functionality, and the implementation for immediacy (the Protected-currency Allocation Amount), are also part of the protocol itself. The protocol utilizes Smart Coins for more generic functionalities.

Smart Coins are an important aspect of the protocol. They represent other types of ownership and identity beyond Primary-currency itself as well as implementations for on-chain processing and operations.

There are a number of ownership and operational representations that are maintained with Smart Coins, and any of these representations or operations are associated with a wallet. These Smart Coins can be held in a wallet in the same way that Primary-currency is held in a wallet, and can be transferred in the same way that Primary-currency is transferred on the blockchain. Smart Coins can be issued by the INN (for example, when new Validators are added), or algorithmically by the blockchain (for example, when ownership is created for a new wallet in a multi-tier blockchain approach), or from users in the system. Smart Coins utilize a composition-based programming philosophy in which groupings of Smart Coin elements combine to produce more sophisticated behavior. Examples of Smart Coins are given below.

Smart Coins can have their own transfer rules. For example, the INN can transfer Validator Smart Coins from one account to another. The INN can also transfer Status Smart Coins, ID Smart Coins, or Voting Smart Coins to a wallet, but cannot transfer them out of a wallet. Wallet Smart Coins can only be transferred by a T1 blockchain. Smart Coins can also have special properties, such as rules upon which they are removed from the blockchain state to save space (leaving only their hashed representations in a Merkle tree), whether they are eligible for reversals when sent from a Protected-currency wallet, or other properties required for specialized functionality. Smart Coins can represent fungible or non-fungible digital assets, or can simply be used as part of transfer or ownership mechanisms.

### Cryptocurrency Classes

Similar to the addition of Smart Coins into the network, there can be other fungible representations of value separate from Primary-currency itself. Separate classes of cryptocurrencies can be maintained in the blockchain. One example is a separate cryptocurrency simply maintained on the network, but which represents another type of value or ownership. This could be valuable in a similar way that ERC20 coins are used in the Ethereum network. The example system can be partnered with others to have other types of cryptocurrencies included on the blockchain and validated using its techniques.

### Protected-currency

The example system can utilize a specific, secondary type of cryptocurrency class called Protected-currency to enable more protections on transfers. No user is ever required to send a transaction in the form of Protected-currency as it is a completely optional feature of the system; however, the use of Protected-currency can provide valuable protections based on trust of one or more trusted third parties (referred to herein as T3P) (in the same way that people trust credit card companies to protect their interests when making online purchases). An account with T3P is required to use Protected-currency, so that its protections can be verified.

### Chargebacks

Protected-currency can be used to handle situations where the ability to have chargebacks or reversed transactions is desired. Protected-currency operates under special rules, different from Primary-currency, but all Protected-currency transactions are validated on the blockchain using the same methodology as Primary-currency. Protected-currency serves as a temporary instrument that represents Primary-currency, but transactions made with Protected-currency can be reversed by T3P. Protected-currency is similar in nature to a particular type of smart contract, but its purpose and use is defined and it is integrated into the core of the protocol.

When a transaction, such as a purchase, is desired to be made with Protected-currency, the sender simply indicates that Protected-currency should be sent instead of Primary-currency. Protected-currency replaces the Primary-currency in the sender's wallet, and Protected-currency is then sent to the recipient. Protected-currency also includes a timestamp indicating when it was sent and a time period upon which it converts back to standard Primary-currency. The system default is Sd seconds (for example, a number of seconds equivalent to 15 days). This conversion is an automatic transaction computed and validated by nodes. During the Sd seconds before Protected-currency becomes Primary-currency, T3P has the authority to reverse the Protected-currency transaction (by adding an inverse transaction). Protected-currency cannot be transferred by a recipient after it is received while still in the form of Protected-currency. At any time while Protected-currency is owned, the recipient can send a message declining the Protected-currency, and it will become Primary-currency in the sender's wallet as if the transaction never happened (which is implemented as a transaction). The sender can also send a message that immediately converts the Protected-currency to Primary-currency for the recipient (for example, when a product has been received in good condition).

In this way, Protected-currency can represent a safer method of transferring value. Customers (senders) can send payments knowing that there are safeguards in place in case a seller (recipient) is acting fraudulently. Disputes are handled through a dispute-resolution process mediated by T3P, similar to credit card disputes. Dispute resolution is based on legal principles such as seller requirements and claims on a platform making a sale.

The Protected-currency time period is automatically incremented when a user indicates suspicion of fraud and initiates a dispute. GOV or T3P can increase the system default value of Sd or further increase a Protected-currency's time period if more time is needed for dispute resolution.

### Theft Protection

Special Protected-currency Wallets can be created so that transactions can only be sent using Protected-currency rather than Primary-currency. Protected-currency Wallets must be created through the approval of T3P, so that identity can be verified. Once users have a verified account with T3P, they can create new Protected-currency Wallets as needed. By using Protected-currency Wallets, if a user's private key is stolen, and funds are illegally transferred, the transaction can be reversed. A stolen private key for a wallet can be proven, and then the transactions can be reversed and sent to a newly created Protected-currency Wallet. This makes the risk of theft significantly lower for those who choose to use Protected-currency Wallets. Protected-currency Wallets use the system value of Sd when transfers are made, and the check is made against the timestamp versus Sd, as opposed to a lifetime associated directly with the Protected-currency in this case. Protected-currency Wallets cannot send the message that immediately converts Protected-currency to Primary-currency. Sd can be modified at any point by GOV or T3P.

### Lost Private Keys

If a user loses a private key, then the user can request that T3P initiate a transfer from a Protected-currency Wallet into another newly-created Protected-currency Wallet owned by the same user. Similarly, Primary-currency can be transferred to a beneficiary upon a holder's death. As a protection against T3P transferring Protected-currency inappropriately (which we never expect to occur, but which we allow a user-controlled safeguard against as a precaution), a user can transfer the Protected-currency in the form of Primary-currency into a new Primary-currency wallet (using the private key, which in this case was not actually lost), therefore effectively reversing an INN-initiated transfer.

### Features

Any transaction out of a Primary-currency wallet can be made by a sender (buyer) in Protected-currency if they have a T3P account. A Protected-currency transaction deducts Primary-currency from the wallet as normal, and the recipient receives Protected-currency rather than Primary-currency. The Protected-currency includes a timestamp on creation and a time period associated with it, upon which it converts to Primary-currency. If a recipient (seller) acts fraudulently, such as by failing to deliver purchased goods, the sender can contact T3P and while the payment is still in the form of Protected-currency, T3P can reverse the transaction.

Protected-currency cannot be transferred from a wallet (other than in the case of the initial conversion from Primary-currency). Protected-currency converts back to Primary-currency automatically at the end of its lifetime. At that point it can no longer be modified by T3P. The sender can set the conversion time period when the Protected-currency is created or use the system default. The recipient can decline the transaction, which returns Primary-currency to the sender's wallet. The sender can send a transaction message (such as when a purchased product has arrived in good condition) converting the Protected-currency to Primary-currency immediately.

Users can elect to keep their Primary-currency in Protected-currency Wallets rather than Primary-currency Wallets. Protected-currency Wallets include added protections against theft and loss. Protected-currency Wallets hold a user's Primary-currency as a normal wallet would, but any outgoing transfers from a Protected-currency Wallet must be in the form of Protected-currency.

The time period for a Protected-currency Wallet transfer can be the system default time. If a user's Protected-currency Wallet private key is stolen and funds are transferred fraudulently, the user can contact T3P, and T3P can reverse the transaction and send the funds into a newly created Protected-currency Wallet with a new private key. If a user loses the wallet's private key, T3P can transfer Protected-currency into a new Protected-currency Wallet. As a protection against T3P transferring Protected-currency inappropriately (which we never expect to occur, but which we allow a user-controlled safeguard against as a precaution), a user transfers the Protected-currency in the form of Primary-currency into a new Primary-currency wallet (using the private key, which in this case was not actually lost), therefore effectively reversing an INN-initiated transfer.

Protected-currency Wallets can be utilized to implement other features like Immediate Transactions, Private Transactions, Identity Verification, and Credit/Loans.

### Immediate Transactions

The system can implement transactions immediately through Immediate Nodes on the Immediate Node Network (INN), such as when a transaction is desired to be implemented on credit card rails or a credit card network or when transactions are desired to be immediately approved through a mobile transaction, as examples. Normally, a transaction is received by a standard node, put into a transaction component of a block-pair, and then the validation component of the block-pair will validate the block and therefore the transaction. A deeper block will be more secure as well, though with Proof-of-Validation, even a validated block with priority at the top of the blockchain is relatively secure, particularly with a value of Vp over 50%. This means that a transaction can take the block time, or Sv seconds, before it is validated and approximately 2*Sv seconds before it is one block deep, even on a T2. This amount of time can be too slow for transactions that need to be validated immediately.

Immediate Nodes are used to implement a traditional, trust-based account network. However, Immediate Nodes use an operational procedure directly integrated into the system protocol for both security and a more seamless integration. Primary-currency owners can use a Protected-currency Wallet to indicate an allocated amount, called the Protected-currency Allocation, or Dallocation. The Dallocation sets aside Primary-currency, Crypto-fiat, or other tokens to be verified immediately by the INN. The Dallocation can be utilized for immediate transactions and represents Primary-currency held in the user's wallet that the INN can transfer through its payment channels based on a user's actions (such as a credit card purchase or mobile app purchase). A user can send an encrypted originating message in order to create the Dallocation for a Protected-currency Wallet, along with an indication of the INN's permissions for sending Primary-currency from the Dallocation. For example, INN transactions can be limited in amounts over a given time period. The amount reserved within the Dallocation cannot be transferred out of the Protected-currency Wallet other than through transactions originating from the INN. Those transactions do not utilize the private key for the Protected-currency Wallet, but instead nodes on the INN use their own private keys to create transactions that can be validated by T2's.

T3P can therefore allow the ability to guarantee payments immediately, and can allow the processing of transactions such as Point of Sale credit card transactions through standard credit card machines. A POS purchase can trigger a transaction withdrawing an amount from a Dallocation. The INN maintains records of balances of the Dallocations for each Protected-currency Wallet that has a Dallocation. The INN sends transactions to the T2's, which updates account balances on the blockchains themselves. When Immediate Node payments are no longer desired, an owner can instruct the INN to send a transaction to the network releasing the Dallocation into standard Primary-currency amounts within the Protected-currency Wallet. Since Dallocations are in Protected-currency Wallets, theft originating from a hack of the INN would be preventable. Fraudulent transactions from the INN can be reversed since Dallocations are held in Protected-currency Wallets. Overall, this approach allows the INN to guarantee a payment, and the guarantee can be instant.

The INN can consolidate transactions over time before submitting them to the actual blockchain. For example, if Wallet A sends 100 Primary-currency to Wallet B, and Wallet B sends 100 Primary-currency to Wallet C, the INN can send a message to the Network that a transaction of 100 Primary-currency was sent from Wallet A to Wallet C. It can summarize state information within its node accounts before synchronizing with the Network.

### Stability

The protocol has the ability to ensure stability through a concept called Crypto-fiat, a nonvolatile one-to-one fiat backed representation of Primary-currency. This is accomplished through the use of the Dallocation. Amounts that are transferred into a Dallocation by a user can be converted through an exchange mechanism into Crypto-fiat. Crypto-fiat can take a number of forms such as Crypto-dollars or Crypto-euros, for example. For every Crypto-dollar that is issued by T3P, as an example, one US Dollar will be put into an escrow account controlled by T3P. The escrow account will be audited, and can be publicly verified as to its integrity from the beginning. Those Crypto-dollars can be transferred within the blockchain for purchases, through Dallocation mechanics. At any point in the future any Crypto-dollar holder can receive a US Dollar out of escrow from T3P in exchange for the Crypto-dollar (which is then destroyed). In this way there are always exactly as many US Dollars in escrow as there are Crypto-dollars in existence, so the price of Crypto-dollars will not be volatile and will track very closely to the value of US Dollars (or Crypto-euros to Euros, etc). Crypto-fiat contained in Dallocation portions of accounts can only be transferred by T3P, and T3P collects fees on Dallocation transfers. However, if users want to transfer cryptocurrency to other users without any fees, they can do so by exchanging Crypto-fiat with Primary-currency, which can then be exchanged back to Crypto-fiat by the recipient. Fundamentally the Dallocation and the Crypto-fiat implementation of Primary-currency allow stable transfers of cryptocurrency, and create a practical way to use cryptocurrency for more than just a store of value. Crypto-fiat is used with the protocol's other features such as fraud, theft, and loss protections, or the implementation of privacy.

Crypto-fiat can also be used to wrap other assets. A Dallocation can contain Crypto-bitcoin, Crypto-ether, or even Crypto-gold. A Dallocation can also contain Crypto-baskets that represent groupings of fiat currencies and other financial instruments which can have even less volatility than the US Dollar.

The ramifications of Crypto-fiat are significant. With a stable cryptocurrency, many things are possible that otherwise would not be. For example, if a cryptocurrency's value is going up, buyers do not want to use it for purchases. If a cryptocurrency's value is going down, sellers do not want to accept it for sales. Loans or credit will have high default rates when a cryptocurrency's value is going up, and lenders will not want to lend with high volatility in either direction. High volatility prevents the use of cryptocurrency in many practical situations, but with a stable version of Primary-currency, it can actually be used for these purposes. Online payments, retail purchases, lending, credit, and foreign exchange all become feasible with Crypto-fiat, and all of the other benefits of a cryptocurrency then become much more powerful.

### Digital Credit and Loans

T3P can provide digital credit (i.e. the equivalent of a digital credit card or a loan) with a Credit Smart Coin or a Loan Smart Coin. Transactions are automatically processed from the account holding the Credit Smart Coin or Loan Smart Coin to pay off the balance. These Smart Coins include all parameters associated with loans/credit, such as balance, interest rate, term, payment terms, compliance and status, etc. Balances are updated automatically based on these parameters (in essence, they operate like a specialized smart contract, with the limited calculation related to the loan's status). Credit Smart Coins and Loan Smart Coins cannot be transferred, of course, except by the loan holder. Credit Smart Coins include an available balance like a standard credit card. Loan Smart Coins disappear when they are paid off. Primary-currency received on credit can be used with the Dallocation described above to enable immediate payments. In this combination, credit can be implemented like a traditional credit card. Credit and lending is a particularly valuable concept when combined with Crypto-fiat.

### Privacy

One of the primary disadvantages of most blockchain approaches is a lack of privacy, since the blockchain relies on all information being publicly available (though encrypted) to obviate the mutual trust required in transactions that are not publicly auditable. The example system has a publicly available blockchain that provides pseudonymous privacy. From a purely technological standpoint, an account/wallet can be held without having any identity associated with it. However, anyone can track where amounts go and the current balance of any wallet like most blockchains. In many legitimate and legal situations, a higher level of privacy is needed. For example, one might wish to keep their wallet balance private, if they can be associated with the wallet. It is common that people do not want to publicly announce their bank account balances. Association between an identity and a wallet can happen over time by combining real-world information with on-chain events, as examples by correlating timing of known purchases or amounts of known purchases with individuals. E.g., mortgage payments, large purchases, or even small purchases such as fuel for an automobile or subway tickets can be used to match a particular wallet with an observed individual. Also, for voting purposes, it is often desired to separate one's vote from one's identity. In many cases, even a vote that is associated pseudonymously can be undesirable. One might not want their vote to be able to later be traced back to them.

One approach to solving the privacy issue is to employ a mathematical solution that prevents visibility on transactions, and makes transactions truly anonymous. An example of this is the ZCash protocol which uses zero knowledge SNARKS in which transactions are encrypted, but the blockchain still assures no double spending. For the principles described herein, however, this is not a preferred solution. First, a large part of the system's philosophy is built around transparency. Since Validators are permissioned, the protection of all users relies on full transparency of the code being used, the rules for the governing foundation, and, for our purposes here, the blockchain itself. A blockchain that can be easily audited in the most transparent way fits the example system. Second, another of the desired principles is to build a practical solution that can evolve as regulations evolve. A true zero-knowledge approach is difficult to reconcile with Know-Your-Customer (KYC) and Anti-Money-Laundering (AML) rules. We believe that a KYC and AML friendly approach is most likely to thrive and grow as government regulations evolve.

All of that said, privacy is important to many users. The present invention's approach to privacy allows an optional methodology for implementing private transactions in cases where it is desired. Our approach uses a trust-based methodology implemented via the INN. In order to send a private transaction, first a user sends Protected-currency to a privacy account owned by T3P from a Protected-currency Wallet. Then the user sends an off-chain message to the INN, encrypted both in terms of the transmission itself and using the wallet's private key to encrypt the transaction, instructing where that transaction should be sent. The INN can validate the transmission against the amount received using the wallet's public key, and then send a transaction message to the network implementing the transaction. A user can transfer money anonymously in this way. However, for KYC and AML purposes, it should be noted that T3P will know the identity of the sender, as Protected-currency Wallets (where the ID is known to T3P) are used for these private transmissions. The amounts sent can be instructed to happen over a time period to one or more wallets in one or more amounts so that public tracking by amount can be obfuscated. Transactions, which are in the form of Protected-currency, that are reversed by the INN must be routed back through the INN, as the public sender for the Protected-currency will be an INN wallet on the blockchain. A reversal received by the INN must reference internal private records to send the Primary-currency back to the original wallet. The INN is the only entity on the blockchain which can send outgoing Protected-currency or Primary-currency amounts based on a transfer from incoming Protected-currency amounts.

This approach can be used in a number of situations. A single transfer can be made privately, where the amount sent cannot be publicly tracked to the destination. Primary-currency owners can privately send amounts to other wallets they own to maintain privacy on the accounts they own, particularly if an account's identity was determined. This can also be done to further obfuscate a transaction from being reverse-engineered. For example, a private transaction can have Protected-currency sent to a recipient address and any remaining Primary-currency can be sent to different wallets the sender owns. Private voting can be implemented, where a Vote Smart Coin can be transferred (i.e. a vote cast) privately through the private transmission to the INN, which in turn transfers the Smart Coin to the correct voting account with the correct weighting, consolidated with other votes so that votes cannot be traced back to the original holders. Votes can include an encrypted message that only the sender can decrypt, to later verify that a vote was cast appropriately. In this way users can vote, as well as verify that their votes were correctly placed, but only they know that their votes originated from them.

If both privacy and immediacy are desired (i.e. a transaction analogous to a credit card transaction), the user can instruct that each transaction indicated as a Dallocation transaction will move remaining balances in the wallet into a new Protected-currency Wallet. The Dallocation in the new wallet can be adjusted by the INN, amounts can be sent to multiple wallets, or amounts can be sent over time in multiple transactions, in order to obfuscate public determination of the transaction. The user can track their balances and wallets through an INN account. Alternatively, an INN account can also receive Primary-currency that can be transferred with both privacy and immediacy, but which never is reflected on the blockchain itself, such as is often done on exchanges. Protected-currency accounts created algorithmically by the INN will retain ownership records matching the owner so that private ownership knowledge is maintained.

The INN can consolidate many transactions and post summaries to the blockchain at intervals, further aiding with privacy and efficiency. The intervals upon which the blockchain is synchronized will not affect the immediacy of transactions. Transactions and balances can even be held entirely off chain, with internal tracking by the INN in wallets associated with T3P.

### Example Summary of Transaction Categories

The following categories indicate how a sender can implement a transaction. All of the categories of transactions other than Primary-currency itself are optional, and are used by a Primary-currency owner only when added functionality or safety is desired. A user can determine whether Protected-currency or Protected-currency Wallets are to be used, and whether the INN is involved in any given transaction.

| | Trustless | Reversible | Protection from Fraud | Protection from Theft / Loss | Immediate | Private |
|---|---|---|---|---|---|---|
| Primary-currency | YES | NO | NO | NO | NO | NO |
| Protected-currency Transaction | YES | YES | YES | NO | NO | NO |
| Protected-currency Wallet | YES | YES | YES | YES | NO | NO |
| Protected-currency/INN w/ Dallocation | NO | YES | YES | YES | YES | Partial |
| Protected-currency to INN w/ off-chain instructions | NO | YES | YES | YES | YES | YES |

In terms of User Interface, the options can be set up in a straightforward manner. The standard software or any app that allows transfers of Primary-currency can have a straightforward checkbox with a Protected-currency option for sending any given transaction, and a standard "info" icon to provide information on using Protected-currency.

Similarly, when wallets are created with Primary-currency software, the alternative Protected-currency Wallet can be described, with a link to T3P page for creating Protected-currency Wallets. When creating Protected-currency Wallets, immediacy and privacy options can be described as options. The underlying implementation does not need to be detailed to users. The choices and ramifications in setting up different types of wallets and implementing different types of transactions will be described in a straightforward way.

### Operation of the Trusted Entity and the Immediate Node Network

GOV is an entity that oversees the operations of the network to assure consensus. The Immediate Node Network (INN) is controlled by GOV and is used to oversee consensus operations and add optional features. It is founded on a system of transparency - the rules that GOV operates under to oversee consensus are available at any time to anyone, all algorithmic operations of the network are available at any time to anyone, and all results of those algorithmic operations (i.e. the blockchain itself) are available at any time to anyone.

### Lending System

T3P provides a mechanism for lending with fixed-supply, protected, fractional reserve lending. Having the ability to borrow Primary-currency can be a very valuable functionality for our community. In order to allow lending and borrowing, the protocol utilizes Lending Coins, Loan Coins, and on-chain contractual mechanisms based on those coins, which together create a lending system that shares some of the same characteristics and benefits of fractional reserve banking. However, in contrast, the example system addresses the weaknesses of fractional reserve banking. The example system's protocol has a specific limit on the amount of Primary-currency that can be issued. A predetermined portion of lending capability is set aside for T3P, called the Primary-currency Loan Reserve (DLR), in order to guarantee the majority of any given withdrawal (80%) for any given depositor. Lenders can only make loans in an aggregate total amount equal to the DLR, given loan issuance rules controlled by Lending Coins. Because loans cannot be made in aggregate beyond the DLR, the lending system is non-inflationary (as it relates to monetary supply) beyond the DLR, and the overall fixed supply of Primary-currency cannot be adjusted more than the DLR. All of the algorithms that define lending mechanisms are implemented automatically by nodes.

In order to implement lending, Lending Coins are issued by T3P. A wallet that contains a Lending Coin can be considered to be a lender. These Lending Coins can be sold by T3P so that a lender has a basis in its activities, or T3P can require a deposit. T3P can also agree to repurchase a Lending Coin, for example, using a fiat currency or Primary-currency, or by returning a deposit. Details are negotiated between T3P and lenders. In order to create a lender, T3P sends a Lending Coin to the lender's wallet indicating both the amount it can lend out to others and the lender's obligations. There are two types of Lending Coins - Fractional Reserve Lending Coins and Full Reserve Lending Coins. Lending Coins record lending authorizations, and Fractional Reserve Lending Coins can only be issued up to an aggregate amount equal to the DLR. Full Reserve Lending Coins do not add to that aggregate amount. If T3P tries to authorize lending in an aggregate amount of Fractional Reserve Lending Coins larger than the DLR, that issuance transmission will be considered invalid by nodes (e.g., computers) in the system.

### Fractional Reserve Lending Coins.

After a fractional reserve lender is created with a Fractional Reserve Lending Coin, it can accept deposits. T3P cannot deposit Primary-currency into lender's accounts. When a lender accepts deposits, a liability is created where the lender has an obligation to return deposits when the depositor requests a withdrawal. After lenders have received deposits, they can make loans to others. Lenders can only loan up to 80% of their deposits, and must maintain 20% of their total outstanding deposits as a Primary-currency reserve. At the end of any given period, if the 20% balance is not maintained, then the lender must borrow money from T3P at a rate defined by the Lending Coin. This will happen automatically on the blockchain. Lenders have an obligation to immediately return 80% of deposits when a withdrawal is requested, and lenders cannot perform any further lending until they have returned the remaining 20% of a withdrawal request. In order to return the final 20% of a withdrawal request, a lender must maintain additional reserve (beyond the 20% reserve) to account for the 20% risk on that withdrawn deposit to maintain the same 20% risk level for other depositors and T3P. When a lender makes a loan, it issues a Loan Coin that defines standard loan terms like interest rate, term, and payment obligations. The lender also issues Primary-currency that the borrower can use. If a depositor wants to make a withdrawal and the lender does not have enough money in its reserve to cover the withdrawal, then the lender must borrow money from T3P to cover the withdrawal. Because 80% of the fractional reserve for all lenders is guaranteed by T3P for withdrawals, and depositors can only demand a withdrawal of 80% of their balances, there is no risk of a lender defaulting on its obligations, even if everyone requests all of their money at once (known in the banking industry as a "bank run"). Because depositors have a 20% risk on their deposits, there is an incentive for lender scrutiny when making deposits. Additionally, Lending Coins can allow voting rights to depositors to approve loans.

### Full Reserve Lending Coins.

A Full Reserve Lending Coin can be issued by T3P to a wallet that contains Primary-currency to cover any lending. When the Full Reserve Lending Coin is issued with a lending limit, an equal amount of Primary-currency in the wallet is locked to the loan, and cannot be transferred other than through a loan. If there are no outstanding loans, the lender can remove the Full Reserve Lending Coin, freeing the locked Primary-currency. The Primary-currency that is locked can be loaned to others within requirements set by the Full Reserve Lending Coin. The lender assumes all risk for bad debt on loans with a Full Reserve Lending Coin. T3P receives a percent of interest profits, defined by the Lending Coin, on full reserve loans.

### Lending

Borrowers receive Primary-currency and Loan Coins representing their debt. Loans are automatically repaid in defined installments described by the Loan Coin in the wallet. Primary-currency amounts in the wallet are automatically applied to loan payments. If a wallet does not contain enough Primary-currency when a loan payment is due, the loan is immediately considered in default, and penalties can be applied to the loan's balance, as defined by the Loan Coin. If the loan is in default for too long a time period or in too high an amount, as defined by the Loan Coin, then the lender has the option to foreclose on the loan. Loan Coin terms must fit within interest rate and other obligations defined by the issuing lender's Lending Coin. Lending Coins must fit within overall lending requirements defined by T3P's bylaws. T3P negotiates the requirements on lending when issuing a Lending Coin, within bylaw limitations.

When a loan is repaid, the principal credits any loans from T3P first and then adds to the lender's reserve second. Interest on the loan is shared between participants as profit. Interest goes 40% to the lender's depositors (pro-rated over all deposit lifetimes during the relevant term of the payment), 50% to the lender, and 10% to T3P. If a loan is not repaid, then the lender must satisfy the outstanding debt by foreclosing on collateral (on or off chain) or by using profits on other loans. Ultimately if the lender itself defaults and goes bankrupt, T3P will guarantee 80% of the deposits out of the DLR, and the Lending Coin in question becomes frozen. Because depositors are in a position to lose 20% of their deposit in the case of loan default, they are incentivized to choose a trustworthy lender. When a Lending Coin is frozen, it still counts towards the aggregate amount that can be loaned with respect to the DLR, but no further lending can occur with that Lending Coin until T3P repays the bad debt associated with it. Therefore, frozen Lending Coins lower the total amount of Primary-currency available to be loaned, until T3P pays off bad debt associated with frozen Lending Coins.

### Credit

T3P can issue credit in the form of Credit Coins from available amounts in the DLR or from Primary-currency ownership, directly to users. Credit Coins act in a similar fashion as credit cards. Where a Loan Coin disappears when a loan is paid off, a Credit Coin can be used for credit on an ongoing basis, subject to the terms associated with its use.

### DLR Availability

The DLR can unlock, and be available for lending purposes, over time. e.g., 20% will unlock one year after launch, and an additional 20% will unlock each year thereafter until the full DLR is available for lending.

### Identity

Identity is a powerful solution within the example protocol. Smart Coins can be issued by the INN in order for users to prove their identity in a variety of use cases. Identity Smart Coins are issued to Protected-currency wallets only, as T3P knows the identity of Protected-currency wallet holders by definition.

Identity Smart Coins can be used in any situation where an identity is required for a transaction, such as a seller that wants to validate an identity for a sale. In this case, the INN can issue an Identity Smart Coin to a Protected-currency Wallet with Primary-currency for the transaction. It is important to note that the identity of the individual does not need to be associated with his/her entire Primary-currency ownership. A Primary-currency owner can create a new Protected-currency Wallet on a case-by-case basis, send Primary-currency to that wallet or receive Primary-currency from someone else, and then request that the INN issue an Identity Smart Coin for the new account. The transfer of Primary-currency to a new Protected-currency Wallet can additionally be handled via a private transaction, described below, so that an Identity Smart Coin cannot be publicly linked with other accounts.

Identity Smart Coins can be encrypted, so that the intended recipient is the only entity that can validate and use the identity. For example, a third-party partner can put a relationship in place with T3P to utilize its identity-validation techniques. The INN can encrypt identities to be decrypted later by the third-party using a provided decryption key. Alternatively, the owner can request an Identity Smart Coin encrypted with a key that the owner holds. The INN can send Identity Smart Coins to wallets upon their owners' requests. Then, transactions originating from an identified Protected-currency Wallet, whether these transactions involve Primary-currency or not, can be verified as originating from a specified identity, using the Identity Smart Coin that the INN sent. Identities can also be verified by T3P with the owner's prior approval. Identity Smart Coin encryptions include numerical aspects of the wallet, such as its public key, so that Identity Smart Coins sent by the INN cannot be associated with unrelated accounts using public records.

As another example of Identity Smart Coin use, T3P can verify the citizenship status of a Protected-currency Wallet owner. This can be initially done by T3P through standard means, such as by obtaining a copy of a passport. The owner can then request that an encrypted Identity Smart Coin be sent to their wallet, including their name and citizenship information, to be used with a service that is only available to citizens of a particular country. The owner could then send a Primary-currency payment to the service provider. The service provider can either decrypt the identity (if that was arranged ahead of time with T3P), or the service provider can request a validation of the ID from T3P, which can provide it with the owner's permission (either as an account setting or as part of the original Primary-currency transmission), or the owner can provide the key to be used to decrypt the identity with an off-chain message.

Identity validation can have many useful purposes. It can be used to enable voting by a third party. It can be used in transactions that require some level of identification such as joining an organization, securing a credit card or mortgage, making a purchase, taking an action restricted to certain groups, participating in a raffle, or interacting with an online group.

Identity Smart Coins can include personal details, such as name, address, email, phone number, gender, nationality, or any other information needed in an identity request. T3P can also aid in identity validation by overseeing other types of identity inputs such as a bank account validation (sending small amounts that are reported back), mobile phone texting validation, validation of government issued IDs or reference numbers, physical facial or fingerprint scans, or any other type of identification information that can lend itself to a digital identity. Identity Smart Coins can be used with third-party systems, such as for submitting a request. An Identity Smart Coin can be used to apply for a membership, where all of the details needed for the application can be included in the Identity Smart Coin, and the transmission of an Identity Smart Coin is the act of applying for the membership.

Below is a list of example use cases. These can be implemented with third parties that establish a relationship with T3P, or they can be implemented via an encryption key that the owner provides separately. T3P can accommodate various implementations based on the user's instructions.

Voting - The INN can issue encrypted Identity Smart Coins to accounts that are eligible for a vote, and those Smart Coins can be sent to the third party's addresses representing voting choices (either through a private or public transmission). In this way, a single vote per identity can be assured.

Memberships - The INN can issue encrypted Identity Smart Coins to eligible members with all of the information required to apply for a membership. The user can send the Identity Smart Coin to the third party's address to apply for the membership. If there are membership fees, those fees can be paid in Primary-currency from the account holding the Identity Smart Coin. A membership can be associated with a physical location like a gym or club, or it can be for online activities like a video game or social site. Identity Smart Coins could be used to verify gender in an online dating site, or age for COPA (Child Online Protection Act) purposes in gaming or other websites.

Raffles - The INN can issue encrypted Identity Smart Coins to eligible participants in a marketing event such as a raffle. Users can self-identify whether they are willing to accept marketing Smart Coins (marketing Smart Coins can also include Primary-currency to incentivize participation, for example). The Identity Smart Coins can assure fair participation.

Obtaining a Credit Card - The INN can issue an encrypted Identity Smart Coin not only including identity information for obtaining the account, but information needed in order to verify a credit score. Alternatively, a pre-paid credit card can be applied for using Primary-currency funds in the user's account. The transmission transferring the Identity Smart Coin to the issuer account represents the application. Applications can of course be submitted for other similar instruments implemented on-chain, like loans (implemented with a Loan Smart Coin) or off-chain like mortgages (implemented through external contracts once the submission is approved).

Restricted Purchases - The INN can issue an Identity Smart Coin to a user upon the user's request so that a restricted purchase can be implemented. The purchase can itself be made in Primary-currency, and the ID Smart Coin can validate requirements for the purchase, such as an age requirement for buying alcohol or securing a senior citizen discount, a gender requirement for buying a ticket to a dating event, a group requirement like a military or educational discount, a location requirement like citizenship, or any other kind of identity validation.

### Crypto-fiat Examples

The following examples show uses of Crypto-fiat, a one to one backed version of Primary-currency which are maintained in Protected-currency Allocation Amounts (Dallocation) in the blockchain. These examples show conceptually how Crypto-fiat can be utilized, but specific implementations will vary in the future as it is fully developed. There are many other types of uses for Crypto-fiat, beyond the examples given here, as well.

Primary-currency owner who wants Crypto-dollars: Mike has Primary-currency that he wants to convert into Crypto-dollars to be able to spend at locations that accept Primary-currency. His Primary-currency is worth $500 at current exchange rates. Joe wants to buy some Primary-currency. Joe purchases the Primary-currency from T3P for $500 (to keep it simple it's just Joe in this example, but these trades could occur with multiple buyers and sellers of course). T3P puts the $500 in escrow, and issues to Mike 500 Crypto-dollars. T3P now has $500 in escrow, Joe has the Primary-currency, and Mike has 500 Crypto-dollars. Mike can spend his 500 Crypto-dollars through T3P's payment channels, such as a Primary-currency app.

Business that wants to accept Crypto-dollars: A restaurant chain wants to accept Crypto-dollars at its restaurants. T3P puts an agreement in place with the chain, and charges a small fee on transactions, though it is a smaller fee than they typically are charged for credit card transactions, for example. T3P provides easy to implement access to its Dallocation payment system. When purchases are made, T3P can immediately verify and approve them, and then all Crypto-dollar transactions need to be sent by T3P to the blockchain. End users (customers at the restaurant) do not see any additional cost, similar to credit card payments. Once the chain has Crypto-dollar revenue, the Crypto-dollars can later be exchanged for USD out of T3P's escrow. At the end of the month the restaurant chain will owe T3P payments on fees. Those fees can be paid in Primary-currency, adding to its liquidity.

Customer who wants Crypto-dollars: Sally wants to spend Crypto-dollars at the restaurant chain given the convenience and safety of Crypto-dollars. Sally creates a wallet, creates an account with T3P, and then purchases 100 Crypto-dollars with $100 USD. T3P then adds 100 Crypto-dollars into Sally's wallet, allocated in the Dallocation, and puts the $100 USD into an escrow account. She can now spend her Crypto-dollars using T3P's app, or a debit card as examples. She walks up to the counter, orders her food, and then makes a payment for $10.22, paid with Crypto-dollars. T3P immediately validates the transaction, and then initiates the transfer on the blockchain to the restaurant chain's Dallocation account. A short while later (after the Protected-currency waiting period) the restaurant chain can exchange the 10.22 Crypto-dollars into $10.22 with T3P.

Crypto-dollar owner who wants to convert to Primary-currency to buy something on Craig's list with no fees: Sally then decides she wants to have direct access to transfer her Crypto-dollars as she chooses, and wants to convert her remaining 90 Crypto-dollars to Primary-currency so that she can transfer a larger sum without fees for a purchase on Craig's List. She indicates to T3P's exchange that she wants to convert her Crypto-dollars to Primary-currency. Ron indicates on the exchange that he wants to sell his Primary-currency. T3P transfers Ron's Primary-currency to Sally (with the amount determined by the current exchange rate), removes her Crypto-dollars, and pays Ron $90 out of escrow. Sally then makes the Craig's list purchase by sending her Primary-currency directly to the Craig's list seller's Primary-currency wallet.

Person sending money to relative in another country: Bob wants to send money to Alice, his sister, who now lives in the Netherlands. Bob buys $500 Crypto-dollars from T3P, converts them to Primary-currency on the exchange, sends them to Alice, and Alice converts them to Crypto-euros on the exchange. There is a small fee for the conversion from Primary-currency to Crypto-euros, but the fee is significantly less than a wire transfer fee, and it happens instantly, securely, and in a way that can be easily and conveniently tracked.

A group of friends chipping in for dinner: 5 friends go out to dinner at a restaurant for a birthday celebration for a 6th friend, who they want to take out. The restaurant accepts Primary-currency/Crypto-fiat. At the end of the night the 5 friends open their Primary-currency apps, scan a QR code the waiter brings them, and each easily puts their share into the total payment.

Roommates splitting rent: Three roommates want to pay their shared rent. Two of them transfer Primary-currency to the third with no fees. The third converts the Primary-currency to US dollars, and pays the rent for them. The next month the apartment complex begins to accept Crypto-dollars as a payment. All three then pay their share of the rent directly with Crypto-dollars.

An efficient bank: Banks can implement banking transactions using Crypto-fiat in a regulated fractional reserve implementation, or credit can be implemented with Crypto-fiat. Crypto-fiat can be combined with credit or Lending Smart Coins. This is particularly compelling with the 60% of the world that doesn't have access to banking.

Person with money in a volatile country: Jose lives in a country that is starting to have hyperinflation. Jose and the people around him simply use Primary-currency for their transactions.

Person worried about inflation, economic decline, etc: Nicole lives in a stable country, but it is going into a recession. She buys Crypto-dollars and converts them into either Primary-currency (depending on its stability over time), or Crypto-worldcoin (through Primary-currency as an intermediary), which is a basket of monetary instruments that includes fiat from a variety of countries, and other relatively stable assets like gold.

A bank wanting an inexpensive way to transfer fiat: A bank can use our system to inexpensively transfer inter-bank payments.

A person wanting to sell Primary-currency: Anyone who wants liquidity in Primary-currency can sell it in and exchange, given the liquidity driven by Primary-currency's general use as a cryptocurrency, its use in paying fees for Crypto-fiat, and its use in digital marketplaces including developer stores.

Users sending other cryptocurrencies: T3P can accept other cryptocurrencies and put them into one-to-one backed escrow account in the same way that Crypto-fiat is implemented. For example, users wanting to transact in Bitcoin but without large delays and fees can send Bitcoin to the INN, receive Crypto-bitcoin in exchange, and then transact the Crypto-bitcoin on the network. At any point Crypto-bitcoin owners can exchange their Crypto-bitcoin for Bitcoin out of escrow.

Implementation Implementation. Methods and apparatuses according to the present invention can be implemented using multiple computers connected in a distributed network. Traditionally, a computer program consists of a finite sequence of computational instructions or program instructions. It will be appreciated that a programmable apparatus (i.e., computing device) can receive such a computer program and, by processing the computational instructions thereof, produce a further technical effect.

A programmable apparatus includes one or more microprocessors, microcontrollers, embedded microcontrollers, programmable digital signal processors, programmable devices, programmable gate arrays, programmable array logic, memory devices, application specific integrated circuits, or the like, which can be suitably employed or configured to process computer program instructions, execute computer logic, store computer data, and so on. Throughout this disclosure and elsewhere a computer can include any and all suitable combinations of a special-purpose computer, programmable data processing apparatus, processor, processor architecture, and so on.

It will be understood that a computer can include a computer-readable storage medium and that this medium can be internal or external, removable and replaceable, or fixed. It will also be understood that a computer can include a Basic Input/Output System (BIOS), firmware, an operating system, a database, or the like that can include, interface with, or support the software and hardware described herein.

Embodiments of the systems as described herein are not limited to applications involving conventional computer programs or programmable apparatuses that run them. It is contemplated, for example, that embodiments of the invention as claimed herein could include an optical computer, quantum computer, analog computer, or the like.

Regardless of the type of computer program or computer involved, a computer program can be loaded onto a computer to produce a particular machine that can perform any and all of the depicted functions. This particular machine provides a means for carrying out any and all of the depicted functions.

Any combination of one or more computer readable medium(s) can be utilized. The computer readable medium can be a computer readable signal medium or a computer readable storage medium. A computer readable storage medium can be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium can be any tangible medium that can contain, or store a program for use by or in connection with an instruction execution system, apparatus, or device.

According to an embodiment of the present invention, a data store can be comprised of one or more of a database, file storage system, relational data storage system or any other data system or structure configured to store data, preferably in a relational manner. In an embodiment of the present invention, the data store can be a relational database, working in conjunction with a relational database management system (RDBMS) for receiving, processing and storing data. In an embodiment, the data store can comprise one or more databases for storing information related to the processing of moving information and estimate information as well one or more databases configured for storage and retrieval of moving information and estimate information.

Computer program instructions can be stored in a computer-readable memory capable of directing a computer or other programmable data processing apparatus to function in a particular manner. The instructions stored in the computer-readable memory constitute an article of manufacture including computer-readable instructions for implementing any and all of the depicted functions.

A computer readable signal medium can include a propagated data signal with computer readable program code embodied therein, for example, in baseband or as part of a carrier wave. Such a propagated signal can take any of a variety of forms, including, but not limited to, electromagnetic, optical, or any suitable combination thereof. A computer readable signal medium can be any computer readable medium that is not a computer readable storage medium and that can communicate, propagate, or transport a program for use by or in connection with an instruction execution system, apparatus, or device.

Program code embodied on a computer readable medium can be transmitted using any appropriate medium, including but not limited to wireless, wireline, optical fiber cable, RF, etc., or any suitable combination of the foregoing.

The elements depicted in flowchart illustrations and block diagrams throughout the figures imply logical boundaries between the elements. However, according to software or hardware engineering practices, the depicted elements and the functions thereof can be implemented as parts of a monolithic software structure, as standalone software modules, or as modules that employ external routines, code, services, and so forth, or any combination of these. All such implementations are within the scope of the present disclosure.

In view of the foregoing, it will now be appreciated that elements of the block diagrams and flowchart illustrations support combinations of means for performing the specified functions, combinations of steps for performing the specified functions, program instruction means for performing the specified functions, and so on.

It will be appreciated that computer program instructions can include computer executable code. A variety of languages for expressing computer program instructions are possible, including without limitation C, C++, Java, JavaScript, assembly language, Lisp, HTML, Perl, and so on. Such languages can include assembly languages, hardware description languages, database programming languages, functional programming languages, imperative programming languages, and so on. In some embodiments, computer program instructions can be stored, compiled, or interpreted to run on a computer, a programmable data processing apparatus, a heterogeneous combination of processors or processor architectures, and so on. Without limitation, embodiments of the system as described herein can take the form of web-based computer software, which includes client/server software, software-as-a-service, peer-to-peer software, or the like.

In some embodiments, a computer enables execution of computer program instructions including multiple programs or threads. The multiple programs or threads can be processed more or less simultaneously to enhance utilization of the processor and to facilitate substantially simultaneous functions. By way of implementation, any and all methods, program codes, program instructions, and the like described herein can be implemented in one or more thread. The thread can spawn other threads, which can themselves have assigned priorities associated with them. In some embodiments, a computer can process these threads based on priority or any other order based on instructions provided in the program code.

Unless explicitly stated or otherwise clear from the context, the verbs "execute" and "process" are used interchangeably to indicate execute, process, interpret, compile, assemble, link, load, any and all combinations of the foregoing, or the like. Therefore, embodiments that execute or process computer program instructions, computer-executable code, or the like can suitably act upon the instructions or code in any and all of the ways just described.

The functions and operations presented herein are not inherently related to any particular computer or other apparatus. It is possible to modify or customize general-purpose systems to be used with programs in accordance with the teachings herein, or it might prove convenient to construct more specialized apparatus to perform the required method steps. The required structure for a variety of these systems will be apparent to those of skill in the art, along with variations. In addition, embodiments of the invention are not described with reference to any particular programming language. It is appreciated that a variety of programming languages can be used to implement the present teachings as described herein, and any references to specific languages are provided for disclosure of enablement and best mode of embodiments of the invention. Embodiments of the invention are well suited to a wide variety of computer network systems over numerous topologies. Within this field, the configuration and management of large networks include storage devices and computers that are communicatively coupled to dissimilar computers and storage devices over a network, such as the Internet.

Throughout this disclosure and elsewhere, block diagrams and flowchart illustrations depict methods, apparatuses (i.e., systems), and computer program products. Each element of the block diagrams and flowchart illustrations, as well as each respective combination of elements in the block diagrams and flowchart illustrations, illustrates a function of the methods, apparatuses, and computer program products. Any and all such functions ("depicted functions") can be implemented by computer program instructions; by special-purpose, hardware-based computer systems; by combinations of special purpose hardware and computer instructions; by combinations of general purpose hardware specialized through computer instructions; and so on - any and all of which can be generally referred to herein as a "circuit," "module," or "system."

While the foregoing drawings and description set forth functional aspects of the disclosed systems, no particular arrangement of software for implementing these functional aspects should be inferred from these descriptions unless explicitly stated or otherwise clear from the context.

Each element in flowchart illustrations can depict a step, or group of steps, of a computer-implemented method. Further, each step can contain one or more sub-steps. For the purpose of illustration, these steps (as well as any and all other steps identified and described above) are presented in order. It will be understood that an embodiment can contain an alternate order of the steps adapted to a particular application of a technique disclosed herein. All such variations and modifications are intended to fall within the scope of this disclosure. The depiction and description of steps in any particular order is not intended to exclude embodiments having the steps in a different order, unless required by a particular application, explicitly stated, or otherwise clear from the context.

The functions, systems and methods herein described can be utilized and presented in a multitude of languages. Individual systems can be presented in one or more languages and the language can be changed with ease at any point in the process or methods described above. One of ordinary skill in the art would appreciate that there are numerous languages the system could be provided in, and embodiments of the present invention are contemplated for use with any language.

While multiple embodiments are disclosed, still other embodiments of the present invention will become apparent to those skilled in the art from this detailed description. The invention is capable of myriad modifications in various obvious aspects, all without departing from the scope of the present invention. Accordingly, the drawings and descriptions are to be regarded as illustrative in nature and not restrictive.

## Claims

1. A method of implementing a private but traceable primary transaction implementing a transfer of an asset from an originator to a recipient using a third party, using a distributed network of computers implementing a distributed ledger, comprising:
(a) recording at the third party information relative to the originator that allows determination of the identity of the originator;
(b) recording on the distributed ledger a transfer of the asset from the originator to the third party and verifying that said transfer has been recorded on the distributed ledger;
(c) communicating from the originator to the third party an identifier of the recipient, where said communication is not recorded on the distributed ledger;
(d) defining a plurality of secondary transactions, each comprising the recipient and a secondary originating party and an asset portion, wherein the combination of asset portions corresponds to the asset and at least some of which secondary originating parties indicate a party other than the originator;
(e) recording on the distributed ledger the plurality of secondary transactions.

2. The method of claim 1, wherein the number of the plurality of secondary transactions is determined by a predetermined method and is at least equal to a predetermined lower bound.

3. The method of claim 2, wherein the number of the plurality of secondary transactions is a random number no more than a predetermined upper bound.

4. The method of claim 1, wherein the third party controls a plurality of wallets on the distributed ledger, and where at least one of the plurality of secondary originating parties is associated with a different wallet than at least one other of the plurality of secondary originating parties.

5. The method of claim 1, wherein recording the plurality of secondary transactions comprises recording the plurality of secondary transactions at a plurality of times.

6. The method of claim 5, wherein at least two of the plurality of times are separated by a time interval determined by a predetermined method and no less than a predetermined lower bound.

7. The method of claim 5, wherein at least two of the plurality of times are separated by a time interval determined by a predetermined method and no more than a predetermined upper bound.

8. The method of claim 1, wherein the third party receives communications specifying a plurality of primary transactions, at least one of which is from the originator and at least one of which is from a party other than the originator, and all of which are to the recipient, and wherein the third party combines the plurality of primary transactions to the recipient and the combined transaction is treated as the primary transaction for the remainder of the method.

9. The method of claim 8, wherein the number of the plurality of secondary transactions is determined by a predetermined method and at least equal to a predetermined lower bound.

10. The method of claim 9, wherein the number of the plurality of secondary transactions is determined by a predetermined method and no more than a predetermined upper bound.

11. The method of claim 1, wherein the third party controls a plurality of wallets on the distributed ledger, and where at least one of the plurality of secondary originating parties is associated with a different wallet than at least one other of the plurality of secondary originating parties.

12. The method of claim 1, wherein recording the plurality of secondary transactions comprises recording the plurality of secondary transactions at a plurality of times.

13. The method of claim 12, wherein at least two of the plurality of times are separated by a time interval determined by a predetermined method and no less than a predetermined lower bound.

14. The method of claim 12, wherein at least two of the plurality of times are separated by a time interval determined by a predetermined method and no more than a predetermined upper bound.

15. The method of claim 1, wherein the originator and the recipient are the same entity.

## Patentansprüche

1. Verfahren zum Implementieren einer privaten, aber verfolgbaren primären Transaktion, bei der unter Verwendung eines verteilten Netzwerks von Computern, die ein verteiltes Hauptbuch implementieren, ein Transfer eines Vermögenswertes unter Verwendung einer Drittpartei von einem Urheber zu einem Empfänger implementiert wird, das Folgendes umfasst:
(a) Aufzeichnen von Informationen über den Urheber bei der Drittpartei, die eine Bestimmung der Identität des Urhebers erlauben;
(b) Aufzeichnen eines Transfers des Vermögenswertes vom Urheber zur Drittpartei im verteilten Hauptbuch und Verifizieren, dass der Transfer im verteilten Hauptbuch aufgezeichnet wurde;
(c) Kommunizieren einer Kennung des Empfängers vom Urheber zur Drittpartei, wo die Kommunikation nicht im verteilten Hauptbuch aufgezeichnet wird;
(d) Definieren einer Vielzahl von sekundären Transaktionen, von denen jede den Empfänger und eine sekundäre Ursprungspartei und einen Vermögenswertabschnitt umfasst, wobei die Kombination von Vermögenswertabschnitten dem Vermögenswert entspricht und wobei mindestens einige der sekundären Ursprungsparteien eine andere Partei als den Urheber anzeigen;
(e) Aufzeichnen der Vielzahl von sekundären Transaktionen im verteilten Hauptbuch.

2. Verfahren nach Anspruch 1, wobei die Anzahl der Vielzahl von sekundären Transaktionen mittels eines vorbestimmten Verfahrens bestimmt wird und mindestens gleich einem vorbestimmten unteren Grenzwert ist.

3. Verfahren nach Anspruch 2, wobei die Anzahl der Vielzahl von sekundären Transaktionen eine Zufallszahl nicht größer als ein vorbestimmter oberer Grenzwert ist.

4. Verfahren nach Anspruch 1, wobei die Drittpartei eine Vielzahl von Wallets im verteilten Hauptbuch steuert und wo mindestens eine der Vielzahl von sekundären Urheberparteien mit einem anderen Wallet verknüpft ist als mindestens eine andere der Vielzahl von sekundären Urheberparteien.

5. Verfahren nach Anspruch 1, wobei das Aufzeichnen der Vielzahl von sekundären Transaktionen das Aufzeichnen der Vielzahl von sekundären Transaktionen zu einer Vielzahl von Zeiten umfasst.

6. Verfahren nach Anspruch 5, wobei mindestens zwei der Vielzahl von Zeiten durch ein Zeitintervall getrennt sind, das mit einem vorbestimmten Verfahren bestimmt wird und nicht kürzer ist als ein vorbestimmter unterer Grenzwert.

7. Verfahren nach Anspruch 5, wobei mindestens zwei der Vielzahl von Zeiten durch ein Zeitintervall getrennt sind, das mit einem vorbestimmten Verfahren bestimmt wird und nicht länger ist als ein vorbestimmter oberer Grenzwert.

8. Verfahren nach Anspruch 1, wobei die Drittpartei Kommunikationen empfängt, die eine Vielzahl von primären Transaktionen spezifizieren, von denen mindestens eine vom Urheber kommt und von denen mindestens eine von einer anderen Partei als dem Urheber kommt und von denen alle an den Empfänger gerichtet sind und wobei die Drittpartei die Vielzahl von primären Transaktionen für den Empfänger kombiniert und die kombinierte Transaktion für den Rest des Verfahrens als die primäre Transaktion behandelt wird.

9. Verfahren nach Anspruch 8, wobei die Anzahl der Vielzahl von sekundären Transaktionen mittels eines vorbestimmten Verfahrens bestimmt wird und mindestens gleich einem vorbestimmten unteren Grenzwert ist.

10. Verfahren nach Anspruch 9, wobei die Anzahl der Vielzahl von sekundären Transaktionen mittels eines vorbestimmten Verfahrens bestimmt wird und nicht über einem vorbestimmten oberen Grenzwert liegt.

11. Verfahren nach Anspruch 1, wobei die Drittpartei eine Vielzahl von Wallets im verteilten Hauptbuch steuert und wo mindestens eine der Vielzahl von sekundären Urheberparteien mit einem anderen Wallet verknüpft ist als mindestens eine andere der Vielzahl von sekundären Urheberparteien.

12. Verfahren nach Anspruch 1, wobei das Aufzeichnen der Vielzahl von sekundären Transaktionen das Aufzeichnen der Vielzahl von sekundären Transaktionen zu einer Vielzahl von Zeiten umfasst.

13. Verfahren nach Anspruch 12, wobei mindestens zwei der Vielzahl von Zeiten durch ein Zeitintervall getrennt sind, das mit einem vorbestimmten Verfahren bestimmt wird und nicht kürzer ist als ein vorbestimmter unterer Grenzwert.

14. Verfahren nach Anspruch 12, wobei mindestens zwei der Vielzahl von Zeiten durch ein Zeitintervall getrennt sind, das mit einem vorbestimmten Verfahren bestimmt wird und nicht länger ist als ein vorbestimmter oberer Grenzwert.

15. Verfahren nach Anspruch 1, wobei der Urheber und der Empfänger dieselbe Entität sind.

## Revendications

1. Procédé d'implémentation d'une transaction primaire traçable mais privée implémentant un transfert d'un actif d'un expéditeur à un destinataire à l'aide d'un tiers, en utilisant un réseau distribué d'ordinateurs implémentant un registre distribué, comprenant :
(a) l'enregistrement au niveau des informations tiers par rapport à l'expéditeur qui permet la détermination de l'identité de l'expéditeur ;
(b) l'enregistrement sur le registre distribué d'un transfert de l'actif de l'expéditeur au tiers et la vérification que ledit transfert a été enregistré sur le registre distribué ;
(c) la communication de l'expéditeur au tiers d'un identifiant du destinataire, où ladite communication n'est pas enregistrée sur le registre distribué ;
(d) la définition d'une pluralité de transactions secondaires, chacune comprenant le destinataire et une partie d'origine secondaire ainsi qu'une partie d'actif, la combinaison des parties d'actifs correspondant à l'actif et au moins certaines des parties d'origine secondaires indiquant une partie autre que l'expéditeur ;
(e) l'enregistrement sur le registre distribué de la pluralité de transactions secondaires.

2. Procédé selon la revendication 1, le nombre de la pluralité de transactions secondaires étant déterminé par un procédé prédéterminé et étant au moins égal à une limite inférieure prédéterminée.

3. Procédé selon la revendication 2, le nombre de la pluralité de transactions secondaires étant un nombre aléatoire de pas plus d'une limite supérieure prédéterminée.

4. Procédé selon la revendication 1, le tiers contrôlant une pluralité de portefeuilles sur le registre distribué, et où au moins une de la pluralité de parties d'origine secondaires étant associée à un portefeuille différent par rapport à au moins une autre de la pluralité de parties d'origine secondaires.

5. Procédé selon la revendication 1, l'enregistrement de la pluralité de transactions secondaires comprenant l'enregistrement de la pluralité de transactions secondaires à une pluralité de moments.

6. Procédé selon la revendication 5, au moins deux de la pluralité de moments étant séparés par un intervalle temporel déterminé par un procédé prédéterminé et n'étant pas inférieurs à une limite inférieure prédéterminée.

7. Procédé selon la revendication 5, au moins deux de la pluralité de moments étant séparés par un intervalle temporel déterminé par un procédé prédéterminé et n'étant pas supérieurs à une limite supérieure prédéterminée.

8. Procédé selon la revendication 1, le tiers recevant des communications spécifiant une pluralité de transactions primaires, dont au moins une vient de l'expéditeur et dont au moins une vient d'un tiers autre que l'expéditeur, et dont la totalité vont vers le destinataire, et le tiers combinant la pluralité de transactions primaires vers le destinataire et la transaction combinée étant traitée en tant que transaction primaire pour le reste du procédé.

9. Procédé selon la revendication 8, le nombre de la pluralité de transactions secondaires étant déterminé par un procédé prédéterminé et au moins égal à une limite inférieure prédéterminée.

10. Procédé selon la revendication 9, le nombre de la pluralité de transactions secondaires étant déterminé par un procédé prédéterminé et n'étant pas supérieur à une limite supérieure prédéterminée.

11. Procédé selon la revendication 1, le tiers contrôlant une pluralité de portefeuilles sur le registre distribué, et où au moins une de la pluralité de parties d'origine secondaires est associée à un portefeuille différent par rapport à au moins une autre de la pluralité de parties d'origine secondaires.

12. Procédé selon la revendication 1, l'enregistrement de la pluralité de transactions secondaires comprenant l'enregistrement de la pluralité de transactions secondaires à une pluralité de moments.

13. Procédé selon la revendication 12, au moins deux de la pluralité de moments étant séparés par un intervalle temporel déterminé par un procédé prédéterminé et n'étant pas inférieurs à une limite inférieure prédéterminée.

14. Procédé selon la revendication 12, au moins deux de la pluralité de moments étant séparés par un intervalle temporel déterminé par un procédé prédéterminé et n'étant pas supérieurs à une limite supérieure prédéterminée.

15. Procédé selon la revendication 1, l'expéditeur et le destinataire étant la même entité.
